(19) Europäisches Patentamt
European Patent Office
Office européen des brevets

(11) **EP 2 010 608 B1**

(12) **EUROPEAN PATENT SPECIFICATION**

(45) Date of publication and mention of the grant of the patent:
**12.11.2014 Bulletin 2014/46**

(21) Application number: **07754945.9**

(22) Date of filing: **04.04.2007**

(51) Int Cl.:
***C08L 83/04*** *(2006.01)*

(86) International application number:
**PCT/US2007/008510**

(87) International publication number:
**WO 2007/117552 (18.10.2007 Gazette 2007/42)**

(54) **TWO-PART TRANSLUCENT SILICONE RUBBER-FORMING COMPOSITION**

ZWEITEILIGE LICHTDURCHLÄSSIGE SILIKONKAUTSCHUK BILDENDE ZUSAMMENSETZUNG

COMPOSITION TRANSLUCIDE EN DEUX PARTIES PERMETTANT D'OBTENIR DU CAOUTCHOUC DE SILICONE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **06.04.2006 US 399558**

(43) Date of publication of application:
**07.01.2009 Bulletin 2009/02**

(73) Proprietor: **Momentive Performance Materials Inc.
Waterford, New York 12188 (US)**

(72) Inventor: **CORREIA, Reuben
Watervliet, NY 12189 (US)**

(74) Representative: **Thoma, Michael et al
Lorenz - Seidler - Gossel
Widenmayerstraße 23
80538 München (DE)**

(56) References cited:
**US-A1- 2005 192 387     US-B1- 6 235 832**

**Description**

FIELD OF THE INVENTION

This invention relates to a two-part room temperature curable, storage-stable silicone rubber-forming composition which on combination of the two parts undergoes rapid curing to provide a silicone rubber. More specifically, the present invention relates to a translucent two-part silanol terminated diorganopolysiloxane based silicone composition having increased stability and excellent physical properties.

BACKGROUND OF THE INVENTION

Two-part room temperature vulcanizing (RTV) silicone compositions are well known for their use as sealants. Two-part RTV silicone compositions typically have one component that contains silanol-terminated diorganopolysiloxane and calcium carbonate filler and another component containing an alkyl-terminated diorganopolysiloxane, catalyst, cross-linker and adhesion promoter. Fumed silicas are not typically used in the component that contains the silanol terminated diorganopolysiloxane due to the tendency of the free silanol (-SiOH) groups on the fumed silica to interact with the silanol terminated polymer thereby causing the component to increase viscosity (structuring) during storage. Moreover, this structuring phenomenon limits the utility of fumed silica fillers in two-part silanol terminated diorganopolysiloxane based sealants.

Prior art reference US 2005/192387 discloses a two-part curable silicone rubber-forming composition comprising a silanol-terminated diorganosiloxane as a first part and tin or titanium compounds as a second part.

A need exists for stable translucent silicone compositions offering rapid primerless bond strength to a wide variety of substrates along with excellent physical properties. The invention disclosed herein provides stable translucent two-part RTV silicone rubber-forming composition that is especially suitable as sealant where the desired characteristics of primerless adhesion, processability and elasticity are important performance criteria.

SUMMARY OF THE INVENTION

The present invention provides for a two-part curable silicone rubber-forming composition as defined by claim 1. Preferred embodiments of the invention are laid down in the dependent claims.

The present invention is based on the discovery that curable silanol-terminated diorganopolysiloxane based composition containing treated fumed silica provides remarkably stable translucent RTV silicone rubber-forming composition offering rapid primerless bond strength to a wide variety of substrates along with excellent physical properties. The composition is especially suitable for use as sealant for glazing applications of window assemblies, e.g., insulated glass units (IGU).

DESCRIPTION OF THE INVENTION

We now disclose stable silicone sealant rubber-forming composition that provide rapid primerless bond strength by combining, i.e., admixing, the two-part curable rubber-forming composition as hereinafter more fully described. The two parts constituting the curable composition, respectively, the "first part" and the "second part," while separated from each other exhibit storage stability of an indefinite duration but once combined, undergo rapid cure to provide the silicone rubber herein.

The term "compatible" as used herein means the optional component does not negatively or adversely affect in a material way the storage stability of the part in which it is contained and when contained in such part, the intended functions of the optional component is not negatively or adversely affected in a material way.

The term "green strength" as defined herein means a high modulus skin of sufficient strength that elements of a construction can be formed and will maintain the desired configuration even if handled, packaged, and shipped after relatively short times, without showing permanent deformation.

The present invention is comprised of a two-part room temperature vulcanizing (RTV) silicone rubber-forming composition. A general description of each of the components of the two-part formulation are given as follows:

The first part of the two-part RTV silicone rubber-forming composition of the present invention contains silanol-terminated diorganopolysiloxane polymer (SDPS) of the general formula:

$$M_a D_b D'_c$$

with the subscript a = 2 and b equal to or greater than 1 and with the subscript c zero or positive where

$$M = (HO)_{3-x-y}R^1_xR^2_ySiO_{1/2};$$

with the subscript x = 0, 1 or 2 and the subscript y is either 0 or 1, subject to the limitation that x + y is less than or equal to 2, where $R^1$ and $R^2$ are independently chosen monovalent hydrocarbon radicals up to about 60 carbon atoms; where

$$D = R^3R^4SiO_{1/2};$$

where $R^3$ and $R^4$ are independently chosen monovalent hydrocarbon radicals of up to about 60 carbon atoms; where

$$D' = R^5R^6SiO_{2/2};$$

where $R^5$ and $R^6$ are independently chosen monovalent hydrocarbon radicals of up to about 60 carbon atoms.

In one embodiment of the present invention, the level of incorporation of the diorganopolysiloxane wherein the silicon atom at each polymer chain end is silanol terminated ranges from about 5 weight percent to about 95 weight percent, and from about 35 weight percent to about 85 weight percent in another embodiment, and in yet another embodiment from about 50 weight percent to about 70 weight percent of the total composition.

According to one embodiment of the present invention, the viscosity of the diorganopolysiloxane wherein the silicon atom at each polymer chain end is silanol terminated is from about 1,000 to about 200,000 cps at 25° C.

The second part of the RTV silicone rubber-forming composition of the present invention comprises a condensation catalyst. The condensation catalyst can be any of those known to be useful for facilitating crosslinking in silicone rubber-forming compositions. The condensation catalyst may include metal and non-metal catalysts. Examples of the metal portion of the metal condensation catalysts useful in the present invention include tin, titanium, zirconium, lead, iron cobalt, antimony, manganese, bismuth and zinc compounds.

The tin compounds useful for facilitating crosslinking in silicone rubber-forming composition include: tin compounds such as dibutyltindilaurate, dibutyltindiacetate, dibutyltindimethoxide, tinoctoate, isobutyltintriceroate, dibutyltinoxide, dibutyltin bis-isooctylphthalate, bis-tripropoxysilyl dioctyltin, dibutyltin bis-acetylacetone, silylated dibutyltin dioxide, carbomethoxyphenyl tin tris-uberate, isobutyltin triceroate, dimethyltin dibutyrate, dimethyltin di-neodecanoate, triethyltin tartarate, dibutyltin dibenzoate, tin oleate, tin naphthenate, butyltintri-2-ethylhexylhexoate, and tinbutyrate. In one embodiment, tin compounds and $(C_8H_{17})_2SnO$ dissolved in $(n-C_3H_9O)_4Si$ are used. In another embodiment, diorganotin bis β-diketonates are used. Other examples of tin compounds may be found in US 5,213,899, US 4,554,338, US 4,956,436, and US 5,489,479, the teachings of which are herewith and hereby specifically incorporated by reference. In yet another embodiment, chelated titanium compounds, for example, 1,3-propanedioxytitanium bis(ethylacetoacetate); di-isopropoxytitanium bis(ethylacetoacetate); and tetra-alkyl titanates, for example, tetra n-butyl titanate and tetra-isopropyl titanate, are used.

According to one embodiment of the present invention, the condensation catalyst is a metal catalyst. In another embodiment of the present invention, the metal condensation catalyst is selected from the group consisting of tin compounds, and in yet another embodiment of the present invention the condensation catalyst is dibutyltin bis-isooctylphthalate.

Other condensation catalyst known to be useful for facilitating crosslinking in silicone rubber-forming compositions include (i) amines such as bis(2,2'-dimethylamino)ethyl ether, trimethylamine, triethylamine, N-methylmorpholine, N,N-ethylmorpholine, N,N-dimethylbenzylamine, N,N-dimethylethanolamine, N,N,N',N'-tetramethyl-1,3-butanediamine, pentamethyldipropylenetriamine, triethanolamine, triethylenediamine, pyridine, pyridine oxide and the like; (ii) strong bases such as alkali and alkaline earth metal hydroxides, alkoxides, and phenoxides; (iii) acidic metal salts of strong acids such as ferric chloride, stannous chloride, antimony trichloride, bismuth nitrate and chloride, potassium hydrogen sulfate and the like; (iv) chelates of various metals such as those which can be obtained from acetylacetone, benzoylacetone, trifluoroacetylacetone, ethyl acetoacetate, salicylaldehyde, cyclopentanone-2-carboxylate, acetylacetoneimine, bis-acetylaceone-alkylenediimines, salicylaldehydeimine, and the like, with the various metals such as Be, Mg, Zn, Cd, Pb, Ti, Zr, Sn, As, Bi, Cr, Mo, Mn, Fe, Co, Ni, or such ions as $MoO_2$ ++, $UO_2$ ++, and the like; (v) alcoholates and phenolates of various metals such as $Ti(OR)_4$, $Sn(OR)_4$, $Sn(OR)_2$, $Al(OR)_3$, and the like, wherein R is alkyl or aryl of from 1 to about 18carbon atoms, and reaction products of alcoholates with carboxylic acids, beta-diketones, and 2-(N,N-dialkylamino) alkanols, such as well known chelates of titanium obtained by this or equivalent procedures; (vi) salts of organic acids with a variety of metals such as alkali metals, alkaline earth metals, Al, Sn, Pb, Mn, Co, Bi, and Cu, including, for example, sodium acetate, potassium laurate, calcium hexanoate, stannous acetate, stannous octoate, stannous oleate, lead octoate, metallic driers such as manganese and cobalt naphthenate, and the like; (vii) organometallic derivatives of tetravalent tin, trivalent and pentavalent As, Sb, and Bi, and metal carbonyls of iron and cobalt; and combinations thereof. In one specific embodiment organotin compounds that are dialkyltin salts of carboxylic acids, can include the non-limiting examples of dibutyltin diacetate, dibutyltin dilaureate, dibutyltin maleate, dilauryltin diacetate, dioctyltin diacetate, dibutyltin-bis(4-methylaminobenzoate), dibuytyltindilaurylmercaptide, dibutyltin-bis(6-methylaminocaproate), and the like, and combinations thereof. Similarly, in another specific embodiment there may be used trialkyltin hydroxide, dialkyltin oxide, dialkyltin dialkoxide, or dialkyltin dichloride and combinations thereof. Non-limiting examples of these compounds include trimethyltin hydroxide, tributyltin hydroxide, trioctyltin hydroxide, dibutyltin oxide, dioctyltin oxide, dilauryltin oxide, dibutyltin-bis(isopropoxide) dibutyltin-bis(2-dimethylaminopentylate), dibutyltin dichloride, dioctyltin dichloride, and the like, and combinations thereof. In yet another embodiment, the condensation catalyst known to be useful for facilitating crosslinking in silicone rubber-forming compositions includes organic and inorganic acids, e.g., hydrochloric acid, sulfuric acid, phosphoric acid, acetic acid, stearic acid, substituted sulfonic acids and the like.

Accordingly, the level of incorporation of the condensation catalyst ranges from about 0.001 weight percent to about 5 weight percent in one embodiment, and from about 0.003 weight percent to about 2.0 weight percent and from about 0.005 weight percent to about 0.5 weight percent of the total composition in another embodiment.

In a typical formulation, the weight ratio of "first part" to "second part" is adjusted to provide optimal performance properties, and the weight ratio of the first part to second part can vary widely, as known in the art, from about 20:1 to about 1:20. According to one specific embodiment of the present invention, the weight ratio of the first part to second part is 10:1.

The first and second parts are typically mixed at 25° C (room temperature); however, the temperature at which the first and second parts are mixed can vary widely from about 25° C to 200° C. According to one embodiment of the present invention, the temperature at which the first and second parts are mixed is 25° C.

The organosilicon crosslinker of the present invention is a compound having one or more leaving groups (i.e., groups that can be easily hydrolyzed), for example, alkoxy, acetoxy, acetamido, ketoxime, benzamido and aminoxy.

The organosilicon crosslinker of the present invention where present can be in the first and/or second part, however, typically will be in the second part. Some of the useful crosslinkers of the present invention include tetra-N-propylsilicate (NPS), tetraethylorthosilicate, methytrimethoxysilane and similar alkyl substituted alkoxysilane compositions, methyltriacetoxysilane, dibutoxydiacetoxysilane, methylisopropoxydiacetoxysilane, methyloximinosilane and the like.

The alkylsilicate (crosslinker) of the present invention has the general formula:

$$(R^{14}O)(R^{15}O)(R^{16}O)(R^{17}O)Si$$

where $R^{14}$, $R^{15}$, $R^{16}$ and $R^{17}$ are independently chosen monovalent hydrocarbon radicals up to about 60 carbon atoms.

According to one embodiment of the present invention, the level of incorporation of the organosilicon crosslinker ranges from about 0.01 weight percent to about 20 weight percent, in one embodiment, and from about 0.3 weight percent to about 5 weight percent and from about 0.5 weight percent to about 1.5 weight percent of the total composition in another embodiment.

In accordance with the invention, the two-part curable composition includes fumed silica. The fumed silica of the present invention where present can be in the first and/or second part, however, typically will be in the first part. It is a component for reinforcement, i.e., increasing the mechanical strength of cured polysiloxane rubber composition. Fumed silicas are not typically used in the component (e.g., one component of a two-part RTV composition) that contains silanol-terminated diorganopolysiloxane because the free silanol (-SiOH) groups on the fumed silica interact with the silanol-terminated polymer causing the component to increase viscosity (structuring) during storage. However, the present invention provides a translucent two-part silanol terminated diorganopolysiloxane based composition utilizing hydrophobic fumed silica imparting unexpected stability.

The fumed silica is treated with a hydrophobizing agent until the desired percentage of silica surface silanol capping has occurred: In one embodiment of the invention, the silicas are treated with an organosilicon selected from the group consisting of silazanes, chlorosilanes, alkoxysilanes, siloxanes and/or polysiloxanes, acetoxysilanes, substituted silanols and mixtures thereof. In another embodiment of the invention, silica is treated with hexamethyldisilazane or the like so that trimethylsilyl groups are bound to silica surfaces although surface treatment with dimethyldichlorosilane, cyclic dimethylsiloxane, hydroxyl-containing dimethyloligosiloxane or the like is acceptable. A mixture of two or more hydrophobic silicas can also be used.

The treated fumed silica filler is hydrophobic silica, which can be used alone or in combination. The hydrophobic silicas are typically ones treated with organosilicon compounds having alkylsilyl groups. The fillers can also be treated with suitable dispersion auxiliaries, adhesion promoters or hydrophobizing agents.

The siloxanes and/or polysiloxanes used as hydrophobizing agents, which can be linear, cyclic or mixtures thereof, typically contain organic groups bonded to silicon. The organic groups can be alkyl, e.g. lower alkyl, alkenyl e.g. lower alkyl, aryl, aralkyl, alkarly, cycloalkyl or cycloalkenyl groups. Suitable groups are e.g. methyl, ethyl, propyl, butyl, isopropyl, phenyl, tolyl (e.g. o-tolyl, p-tolyl or m-tolyl), benzyl, vinyl, allyl, methallyl, cyclopentyl, cyclohexyl or cyclohexenyl groups. Generally, however, there are used methyl and/or phenyl groups with or without a portion of vinyl groups. Suitable siloxanes include for example hexamethylcyclotrisiloxane, octamethylcyclotetrasiloxane, tetramethyltetravinylcyclotetrasiloxane, decamethylcyclopentasiloxane, hexamethyldisiloxane, sym.-tetramethyldivinylsiloxane, sym.-trimethyltriphenylcyclotrisiloxane, octamethyltrisiloxane, octamethylcyclotetratrisiloxane, decamethyltetrasiloxane and other linear diorganopolysiloxanes, including diorganopolysiloxanes with hydroxy and end groups, such as 1,7-dihydroxyoctamethyltetrasilosane, 1,9-dihydroxydecamethylpentasiloxane and 1,11-dihydroxyduodecamethylhexasiloxane. Further usable siloxanes are 1,3,5,8-hexamethyldisiloxane, 1,3-divinyl-1,1,3,3-tetramethyldisiloxane and 1,3,5-trimethyl-1,3,5-triphenylcyclotrisiloxane.

As hydrophobizing agent there can be employed organosilicon compounds, e.g., organosilanes. Suitable organosilicon compounds for use in the present invention include methyltrichlorosilane, dimethyldichlorosilane, trimethylchlorosilane, methyltrimethoxysilane, dimethyldimethoxysilane, trimethylmethoxysilane, methyltriethoxysilane, dimethyldiethoxysilane, trimethylethoxysilane, methyltriacetoxysilane, dimethyldiacetoxysilane, trimethylacetoxysilane, octylmethyldichlorosilane, octyltrichlorosilane, octadecylmethyldichlorosilane, octadecyltrichlorosilane, vinyltrichlorosilane, vinylmethyldichlorosilane, vinyldimethylchlorosilane, vinyltrimethoxysilane, vinylmethyldimethoxysilane, vinyldimethylmethoxysilane, vinyltriethoxysilane, vinylmethyldiethoxysilane, vinyldimethylethoxysilane, hexamethyldisilazane, divinyltetramethyldisilazane, bis(3,3-trifluoropropyl)tetramethyldisilazane, octamethylcyclotetrasilazane, and trimethylsilanol. It is also possible to use any desired mixtures of organosilicon compounds. In one embodiment of the present invention the hydrophobizing agents are selected from the group consisting siloxanes and/or polysiloxanes, chlorosilanes, alkoxysilanes, disilazanes and mixtures thereof. In another embodiment of the present invention the hydrophobizing agent is a disilazane, e.g., hexamethyldisilazane.

Other suitable fillers include polymer particles, which may also be crosslinked, such as those of polystyrene, polycarbonate, polyethylene, polypropylene or polymethyl methacrylate, e.g., Agfaperl®. Also suitable are, in particular, organic and inorganic fillers having a primary particle size of from 0.01 to 300 nm. Examples of suitable fillers are clays and/or nanoclays, ceramic microspheres, glass bubbles, glass powder, glass nanoparticles, for example Monospher® (Merck), glass microparticles, for example Spheriglas® (Potters-Ballotini). Also suitable are organic and/or inorganic oxides and mixed oxides, in particular of the elements silicon, aluminum, magnesium, titanium and calcium. Examples of such fillers are silicon dioxide, in particular pyrogenic oxides, for example Aerosil® (Degussa), silicates, for example talc, pyrophyllite, wollastonite, aluminosilicates, for example feldspar or zeolites.

Further examples of treated fumed silicas for use in the present invention include commercially available treated silicas, such as from Degussa Corporation under the tradename AEROSIL, such as AEROSIL R8200, R9200, R812, R812S, R972, R974, R805, R202 and Cabot Corporation under the tradename CAB-O-SIL ND-TS, TS610 or TS710.

According to one embodiment of the present invention, the fumed silica has a BET specific surface area greater than about 10 $m^2$ /g. In another embodiment of the present invention, the fumed silica has a BET specific surface area about 50 to about 400 $m^2$/g.

In one embodiment of the present invention, the fumed silica can be added in amounts from about 5 to about 80 weight percent of first part (a), and according to another embodiment the fumed silica can be present in amounts from about 10 to about 30 weight percent of first part (a).

Optionally, the first and/or second part of the curable two-part composition can contain one or more additional ingredients, e.g., alkyl terminated diorganopolysiloxane, filler, UV stabilizer, antioxidant, adhesion promoter, cure accelerator, thixotropic agent, plasticizer, moisture scavenger, pigment, dye, surfactant, solvent and biocide, the additional component being present in the first part and/or second part, whichever part(s) the component is compatible therewith. Thus, e.g., alkyl terminated diorganopolysiloxane where present can be in the first and/or second part, filler, where present, can be in the first and/or second part; U.V. stabilizer where present, will ordinarily be in the first and/or second part; antioxidant, where present will ordinarily be in the first and/or second part; adhesion promoter, where present, will be in the first and/or second part; cure accelerator, where present, will be in the first and/or second part; thixotropic agent, where present, will be included in the first and/or second part; plasticizer, where present, is in the first and/or second part; moisture scavenger, where present, will be in the first and/or second part; pigment, where present, can be in the first and/or second part; dye, where present, can be in the first and/or second part; surfactant, where present, can be in the first and/or second part; solvent, where present, can be in the first and/or second part; and, biocide, where present, will be incorporated in the first and/or second part.

The alkyl terminated diorganopolysiloxane polymer of the present invention is advantageously selected from amongst those of the general formula

$$M''_e D''_f D'''_g$$

with the subscript e = 2 and f equal to or greater than 1 and with the subscript g zero or positive where

$$M'' = R^7 R^8 R^9 SiO_{1/2};$$

where $R^7$, $R^8$ and $R^9$ are independently chosen monovalent hydrocarbon radicals up to about 60 carbon atoms; where

D" = $R^{10}R^{11}SiO_{2/2}$;

where $R^{10}$ and $R^{11}$ are independently chosen monovalent hydrocarbon radicals up to about 60 carbon atoms; where

D''' = $R^{12}R^{13}SiO_{2/2}$;

where $R^{12}$ and $R^{13}$ are independently chosen monovalent hydrocarbon radicals up to about 60 carbon atoms.

The level of incorporation of the diorganopolysiloxane wherein the silicon atom at each polymer chain end is alkyl terminated ranges from slightly above 0 weight percent to about 50 weight percent, and in one embodiment from about 5 weight percent to about 35 weight percent, and in another embodiment from about 10 weight percent to about 30 weight percent of the total composition.

. According to one embodiment of the present invention, the viscosity of the diorganopolysiloxane wherein the silicon atom at each polymer chain end is alkyl terminated is from about 50 to about 200,000 cps at 25° C.

The RTV silicone rubber-forming composition of the present invention can also comprise an adhesion promoter. Suitable alkoxysilane adhesion promoters include n-2-aminoethyl-3-aminopropyltrimethoxysilane, n-2-aminoethyl-3-aminopropyltriethoxysilane, 1,3,5-tris(trimethoxysilylpropyl)isocyanurate, γ-aminopropyltriethoxysilane, γ-aminopropyltrimethoxysilane, bis-γ-trimethoxysilypropyl)amine, N-Phenyl-γ-aminopropyltrimethoxysilane, triaminofunctionaltrimethoxysilane, γ-aminopropylmethyldiethoxysilane, γ-aminopropylmethyldiethoxysilane, methacryloxypropyltrimethoxysilane, methyl aminopropyltrimethoxysilane, γ-glycidoxypropylethyldimethoxysilane, γ-glycidoxypropyltrimethoxysilane, γ-glycidoxyethyltrimethoxysilane, β-(3,4-epoxycyclohexyl)propyltrimethoxysilane, β-(3,4-epoxycyclohexyl) ethylmethyld-imethoxysilane, isocyanatopropyltriethoxysilane, isocyanatopropylmethyldimethoxysilane, β-cyanoethyltrimethoxysi-lane, γ-acryloxypropyltrimethoxysilane, γ-methacryloxypropylmethyldimethoxysilane, 4-amino-3,3,-dimethylbutyltrimethoxysilane, and n-ethyl-3-trimethoxysilyl-2-methylpropanamine and mixtures thereof.

In one embodiment of the present invention, the adhesion promoter is selected from the group consisting of n-2-aminoethyl-3-aminopropyltrimethoxysilane and 1,3,5-tris(trimethoxysilylpropyl)isocyanurate and mixtures thereof. In another embodiment of the invention the adhesion promoter is selected from the group consisiting of γ-aminopropyltrimethoxysilane and 1,3,5-tris(trimethoxysilylpropyl)isocyanurate and mixtures thereof.

According to one embodiment of the present invention, the level of incorporation of the alkoxysilane (adhesion promoter) ranges from about 0.1 weight percent to about 20 weight percent, and from about 0.3 weight percent to about 10 weight percent. In yet another embodiment, the adhesion promoter ranges from about 0.5 weight percent to about 5 weight percent of the total composition.

Optional components comprise a non-ionic surfactant compound selected from the group of surfactants consisting of polyethylene glycol, polypropylene glycol, ethoxylated castor oil, oleic acid ethoxylate, alkylphenol ethoxylates, copolymers of ethylene oxide (EO) and propylene oxide (PO) and copolymers of silicones and polyethers (silicone polyether copolymers), copolymers of silicones and copolymers of ethylene oxide and propylene oxide and mixtures thereof in an amount ranging from 0 weight percent to about 20 weight percent, more preferably from about 0.1 weight percent to about 5 weight percent, and most preferably from about 0.2 weight percent to about 1 weight percent of the total composition. The use of silicone polyether as a non-ionic surfactant is described in US 5,744,703 the teachings of which are herewith and hereby specifically incorporated by reference.

Furthermore, the compositions of the present invention can be prepared using either batch or continuous modes of manufacture. Preferably, the ingredients such as silicone polymer, filler, cure catalyst, crosslinker, adhesion promoter, plasticizers, process aids, and other additives are combined in a continuous compounding extruder to produce the desired sealant composition. Both the "first part (a)" and the "second part (b)" are prepared in this manner. The continuous compounding extruder can be any continuous compounding extruder such as the twin screw Werner-Pfleiderer extruder, or a Buss, or P.B. Kokneader extruder.

In the broadest conception of the present invention, all the ingredients may be mixed in the continuous compounding extruder, that is silicone polymer, filler, plasticizer, a condensation catalyst and an adhesion promoter, etc. In such a process, which is continuous, the extruder is operated at a range of 20° to 200° C., but more preferably in the range of 25° to 50° C and the extruder is operated at a partial vacuum so as to remove volatiles during the mixing process.

The following ingredients, as described herein below, were used to prepare Examples 1, 2, 3 and 4.

Polymer 1 is a mixture of polydimethylsiloxanes endblocked with hydroxyl groups and having an overall viscosity of approximately 10,000 cps (available from General Electric Advanced Materials)

Filler 1 is octamethylcyclotetrasiloxane and hexamethyldisilazane treated fumed silica filler having a surface area of 160 $\pm$ 25 $m^2$/g (manufactured by General Electric Advanced Materials).

Filler 2 is hexamethyldisilazane treated fumed silica having a surface area of 160 $\pm$ 25 $m^2$/g available from Degussa as Aerosil R8200 Hydrophobic Fumed Silica.

Plasticizer is polydimethylsiloxanes endblocked with trimethylsilyl groups and having a viscosity of approximately 100 cps (available from General Electric Advanced Materials).

Rheology additive is polyalkyleneoxide modified organosilicone co-polymer having a viscosity of about 100 to about 3000 centipoise at 25°C (available from General Electric Advanced Materials).

Polymer 2 is a polydimethylsiloxanes endblocked with trimethylsilyl groups and having a viscosity of approximately 10,000 cps (available from General Electric Advanced Materials).

Filler 3 is octamethylcyclotetrasiloxane treated fumed silica filler with a surface area of approximately 200 $\pm$ 20 $m^2$/g (manufactured by General Electric Advanced Materials).

Adhesion promoter 1 is aminoethylaminopropyltrimethoxysilane (available from General Electric Advanced Materials as Silquest A-1120 silane).

Adhesion promoter 2 is 1,3,5-tris(trimethoxysilylpropyl)isocyanurate (available from General Electric Advanced Materials as A-Link 597 silane).

Adhesion promoter 3 is gamma-aminopropyltrimethoxysilane (available from General Electric Advanced Materials as Silquest A-1110 silane).

Crosslinker is tetra-N-propylsilicate (NPS) (available from Degussa).

Catalyst is dibutyltin bis-isooctylphthalate (available from General Electric Advanced Materials).

EXAMPLE 1 AND 2

Examples 1 and 2 illustrate a first part preparation of a translucent fumed silica/silanol terminated polymer based two-part composition.

The ingredients used to prepare Examples 1 and 2 are displayed in Table 1.

TABLE 1

| Ingredients (weight %) | Example 1 | Example 2 |
|---|---|---|
| Polymer 1 | 68 | 68 |
| Filler 1 | 20 | - |
| Filler 2 | - | 20 |
| Plasticizer | 12 | 12 |

The stability (rate of increase in viscosity) of Examples 1 and 2 was determined by storing them in disposable polyethylene cartridges (Semco #250-06, 6 fluid oz. capacity) and measuring over time the Application Rates using WPSTM test E-56 at a temperature of 73° F and relative humidity (RH) of 50%. In all instances, the Application Rate data was generated using the Semco #250-06 cartridge with its corresponding plunger and a 250 #440 Semco nozzle having an orifice of 0.125 inches. The formulations were extruded using a sealant gun and compressed air or nitrogen at 90 psi. The reported Application Rate value was the weight of the formulation that was extruded in 1 minute. The results are presented in Table 2.

TABLE 2

| Time | Example 1 (Application Rate in grams/minute) | Example 2 (Application Rate in grams/minute) |
|---|---|---|
| 7 days | 31 | 617 |
| 14 days | 0 | 626 |
| 21 days | 0 | 554 |
| 28 days | 0 | 566 |
| 14 months | 0 | 162 |

The results of Examples 1 and 2 WPSTM test E-56 are presented in Table 2. Example 1 demonstrated typical thickening effect (structuring) due to the interaction of the free silanol groups on the fumed silica with the silanol terminated polymer resulting in an increase in viscosity. Accordingly, a very low Application Rate of 31 for Example 1 was observed at 7 days of aging. Example 1 was unable to be extruded at 14 days or thereafter. Significantly, Example 2 demonstrated exceptional Application Rates from 7 days to 28 days. In addition, although the application rate had dropped at 14 months, Example 2 was still extrudable enabling this formulation to be converted into a practical (stable) two-part translucent fumed silica/silanol terminated polymer based sealant.

The PDMS, Filler 2 and plasticizer of Example 2 along with a rheology additive were used to prepare the first part of the two-part translucent sealant compositions of Examples 3 and 4. See Table 3.

TABLE 3

| | Example 3 (Two-part sealant composition) | Example 4 (Two-part sealant composition) |
|---|---|---|
| Example 2 (First part of two-part sealant) | | |
| Ingredients (weight %) | | |
| Polymer 1 | 63.3 | 63.3 |
| Filler 2 | 18 | 18 |
| Plasticizer | 18 | 18 |
| Rheology additive | 0.7 | 0.7 |
| | | |
| Second Part of two-part sealant | | |
| Ingredients (weight %) | | |
| Polymer 2 | 55.45 | 55.20 |
| Filler 3 | 12 | 12 |
| Adhesion promoter 1 | 16 | - |
| Adhesion promoter 2 | 4 | 4 |
| Adhesion promoter 3 | - | 16 |
| NPS | 11.6 | 11.6 |
| Catalyst | 0.95 | 1.2 |

The first and second part of Examples 3 and 4 were individually mixed at a 10:1 (first part/second part) weight ratio to provide the physical properties at full cure (7 days) listed in Table 4. The physical properties of Examples 3 and 4 were tested as per the ASTM test methods listed in the Table 4. The translucency of the sealants was determined by measuring the transmittance (%) of a sheet of sealant made as per ASTM D412 (cured for 7 days) using a BYK Gardner Haze-gard Plus instrument.

TABLE 4

| | Example 3 | Example 4 |
|---|---|---|
| Tensile (psi), ASTM D412 | 214 | 191 |
| Elongation (%), ASTM D412 | 236 | 213 |
| 100% Modulus (psi), ASTM D412 | 87 | 95 |
| Shore A Hardness, ASTM D2240 | 27 | 29 |
| Transmittance (%) | 70 | 72 |

In addition to physical properties, Examples 3 and 4 were tested for their adhesion strength build properties. This strength build data of Example 3 and 4 is presented in Table 5 and was obtained using lap shear adhesion as measured by WPSTM test C-1221. In all instances, the lap shear adhesion data was generated using test panels comprising glass-glass or vinyl-glass combinations. The panels were prepared using 1 inch wide coupons overlapping ½ inch using 1/16 inch of sealant in a glass to glass or vinyl to glass configuration. The samples were cured under 50% RH and 73°F.

TABLE 5

| Time | Example 3 | | Example 4 | |
|---|---|---|---|---|
| | Glass (psi) | Vinyl (psi) | Glass (psi) | Vinyl (psi) |
| 30 min. | 20 | 3 | 10 | 5 |
| 60 min. | 44 | 6 | 34 | 8 |
| 180 min. | 81 | 11 | 65 | 17 |
| 360 min. | 81 | 31 | 86 | 36 |
| 1 day | 113 | 97 | 108 | 73 |
| 7 days | 166 | 101 | 151 | 109 |

The adhesion strength build was measured by lap shear as determined by the following procedure: The surfaces of all substrates (glass & vinyl) were cleaned prior to preparation of the lap shear test coupon. All substrates were cleaned using a soap (Ajax® Dish Liquid) and water solution. After cleaning, the surfaces of the substrates were immediately wiped dry with a clean Kimwipe®. The test specimens measuring 1 inch by 3 inches, were prepared using a jig assembly in order to ensure the reproducibility of the bond line thickness (1/16 of an inch) and overlap (0.50 inches) of the lap shear test specimen. The test specimens were cured under standard conditions (25° C and 50% Relative Humidity) for the time specified. Performance measurements were obtained using a standard tensile tester. Each test specimen was pulled (at a crosshead speed of 0.5 in. per minute) to failure. The lap shear strength (psi) was calculated in accordance with the following formula:

$$\text{Lap Shear Strength (psi)} = \frac{\text{Peak load (lb.)}}{\text{Bonded Area (sq. in.)}}$$

In addition to physical properties, Examples 3 and 4 of the present invention also demonstrated excellent primerless adhesion strength build as shown in Table 5, in particular Examples 3 and 4 demonstrated excellent adhesion strength build within 60 minutes between glass and glass, as well as vinyl (plastic) and glass.

## Claims

1. A two-part curable silicone rubber-forming composition which is stable during storage as two parts, the composition comprising:

   a) a first part comprising diorganopolysiloxane wherein the silicon atom at each polymer chain end is silanol terminated;
   b) a second part comprising a condensation catalyst;
   c) a crosslinker in the first and/or second part;
   d) fumed silica having surface silanol groups treated with a capping agent, the fumed silica being present in the first and/or second part; and, optionally,
   e) at least one additional component selected from the group consisting of alkyl-terminated diorganopolysiloxane, filler, UV stabilizer, antioxidant, adhesion promoter, cure accelerator, thixotropic agent, plasticizer, moisture scavenger, pigment, dye, surfactant, solvent and biocide, the additional component being present in the first part and/or second part, whichever part(s) the component is compatible therewith,
   the first part and second part following their combination curing to provide a silicone rubber,
   wherein the capping agent is selected from the group consisting of methyltrichlorosilane, dimethyldichlorosilane, trimethylchlorosilane, methyltrimethoxysilane, dimethyldimethoxysilane, trimethylmethoxysilane, methyltriethoxysilane, dimethyldiethoxysilane, trimethylethoxysilane, methyltriacetoxysilane, dimethyldiacetoxysilane, trimethylacetoxysilane, octylmethyldichlorosilane, octyltrichlorosilane, octadecylmethyldichlorosilane, octadecyltrichlorosilane, vinyltrichlorosilane, vinylmethyidichlorosilane, vinyldimethylchlorosilane, vinyltrimethoxysilane,
   vinylmethyldimethoxysilane, vinyldimethylmethoxysilane, vinyltriethoxysilane, vinylmethyldiethoxysilane, vinyldimethylethoxysilane, hexamethyldisilazane, divinyltetramethyldisilazane, bis(3,3-trifluoropropyl)tetramethyldisilazane, octamethylcyclotetrasilazane, and trimethylsilanol and mixtures thereof.

2. The two-part curable composition of Claim 1 having one of the following features (i)-(xxvii):

(i) the silanol-terminated diorganopolysiloxane is of the general formula:

$$M_a D_b D'_c$$

wherein a is 2, b is equal to or greater than 1 and c is zero or a positive value where $M = (HO)_{3-x-y}R^1_x R^2_y SiO_{1/2}$; with the subscript x being 0, 1 or 2 and the subscript y being either 0 or 1, subject to the limitation that x + y is less than or equal to 2, where $R^1$ and $R^2$ are independently chosen monovalent hydrocarbon radicals up to 60 carbon atoms; where

$$D = R^3 R^4 SiO_{1/2};$$

where $R^3$ and $R^4$ are independently chosen monovalent hydrocarbon radicals up to 60 carbon atoms; where

$$D' = R^5 R^6 SiO_{2/2};$$

where $R^5$ and $R^6$ are independently chosen monovalent hydrocarbon radicals of up to 60 carbon atoms; or
(ii) the silanol-terminated diorganopolysiloxane ranges from 5 weight percent to 95 weight percent of the total composition; or
(iii) the silanol-terminated diorganopolysiloxane ranges from 35 weight percent to 85 weight percent of the total composition; or
(iv) the silanol-terminated diorganopolysiloxane ranges from 50 weight percent to 70 weight percent of the total composition; or
(v) the silanol-terminated diorganopolysiloxane possesses a viscosity of from 1,000 to 200,000 cps at 25°C; or
(vi) the fumed silica has a BET specific surface area greater than 10 $m^2$/g; or
(vii) the fumed silica ranges from 5 to 80 weight percent of first part (a); or
(viii) the alkyl terminated diorganopolysiloxane has the general formula:

$$M''_e D''_f D'''_g$$

with the subscript e = 2 and f equal to or greater than 1 and with the subscript g zero or positive where

$$M'' = R^7 R^8 R^9 SiO_{1/2};$$

where $R^7$, $R^8$ and $R^9$ are independently chosen monovalent hydrocarbon radicals up to 60 carbon atoms; where

$$D'' = R^{10} R^{11} SiO_{2/2};$$

where $R^{10}$ and $R^{11}$ are independently chosen monovalent hydrocarbon radicals up to 60 carbon atoms; where

$$D''' = R^{12} R^{13} SiO_{2/2};$$

where $R^{12}$ and $R^{13}$ are independently chosen monovalent hydrocarbon radicals up to 60 carbon atoms; or
(ix) the alkyl terminated diorganopolysiloxane ranges from 0 weight percent to 50 weight percent of the total composition; or
(x) alkyl terminated diorganopolysiloxane ranges from 5 weight percent to 35 weight percent of the total composition; or
(xi) the alkyl terminated diorganopolysiloxane ranges from 10 weight percent to 30 weight percent of the total composition; or
(xii) the alkyl terminated diorganopolysiloxane possesses a viscosity of from 50 to 200,000 cps at 25°C; or
(xiii) the condensation catalyst is selected from the group consisting of metal and non-metal catalysts; or
(xiv) the crosslinker has at least one leaving group selected from the group consisting of alkoxy, acetoxy, acetamido, ketoxime, benzamido, aminoxy and mixtures thereof; or
(xv) the crosslinker is an alkylsilicate; or
(xvi) the crosslinker is selected from the group consisting of tetra-N-propylsilicate, tetraethylorthosilicate, methytrimethoxysilane, methyltriacetoxysilane, dibutoxydiacetoxysilane, methylisopropoxydiacetoxysilane, methyloximinosilane and mixtures thereof; or

(xvii) alkyl terminated diorganopolysiloxane, where present is in the first and/or second part, filler, where present, is in the first and/or second part; U.V. stabilizer, where present, is in the first and/or second part; antioxidant, where present, is in the first and/or second part; adhesion promoter, where present, is in the first and/or second part; cure accelerator, where present, is in the first and/or second part; thixotropic agent, where present, is in the first and/or second part; moisture scavenger, where present, is in the first and/or second part; pigment, where present, is in the first and/or second part; dye, where present, is in the first and/or second part; surfactant, where present, is in the first and/or second part; solvent, where present is in the first and/or second part; and, biocide, where present, is in the first and/or second part; or

(xviii) the adhesion promoter is selected from the group consisting of n-2-aminoethyl-3-aminopropyltrimethoxysilane, 1,3,5-tris(trimethoxysilylpropyl)isocyanurate, n-2-aminoethyl-3-aminopropyltriethoxysilane, γ -aminopropyltriethoxysilane, γ-aminopropyltrimethoxysilane, bis-γ-trimethoxysilylpropyl)amine, N-Phenyl-γ-aminopropyltrimethoxysilane, triaminofunctionaltrimethoxysilane, γ-aminopropylmethyldiethoxysilane, γ-aminopropylmethyldiethoxysilane, methacryloxypropyltrimethoxysilane, methylaminopropyltrimethoxysilane, γ-glycidoxypropylethyldimethoxysilane, γ-glycidoxypropyltrimethoxysilane, γ-glycidoxyethyltrimethoxysilane, β-(3,4-epoxycyclohexyl)propyltrimethoxysilane, β-(3,4-epoxycyclohexyl) ethylmethyldimethoxysilane, isocyanatopropyltriethoxysilane, isocyanatopropylmethyldimethoxysilane, β-cyanoethyltrimethoxysilane, γ-acryloxypropyltrimethoxysilane, γ-methacryloxypropylmethyldimethoxysilane, 4-amino-3,3,-dimethylbutyltrimethoxysilane, n-ethyl-3-trimethoxysilyl-2-methylpropanamine and mixtures thereof; or

(xix) the surfactant is a non-ionic surfactant selected from the group of surfactants consisting of polyethylene glycol, polypropylene glycol, ethoxylated castor oil, oleic acid ethoxylate, alkylphenol ethoxylates, copolymers of ethylene oxide and propylene oxide and copolymers of silicones and polyethers, copolymers of silicones and copolymers of ethylene oxide and propylene oxide and mixtures thereof in an amount ranging from 0 weight percent to about 20 weight percent of the total composition; or

(xx) the transmittance of a sheet of the silicone rubber made as per ASTM test D412 is greater than 40 percent; or

(xxi) the transmittance of a sheet of the silicone rubber made as per ASTM test D412 is greater than 60 percent; or

(xxii) the cured composition has a green strength between 6.89 kPa (1 psi) and 517 kPa (75 psi) after curing for a period of time ranging from 1 minute to 60 minutes; or

(xxiii) the cured composition has a green strength between 6.89 kPa (1 psi) and 310 kPa (45 psi) after curing for a period of time ranging from 1 minute to 60 minutes; or

(xxiv) the first part (a) exhibits a change in application rate as measured by WPSTM test E-56 at a temperature of 22.77°C (73° F) and relative humidity of 50 percent from 7 to 28 days of less than 1000 grams/minute; or

(xxv) the first part (a) exhibits a change in application rate as measured by WPSTM test E-56 at a temperature of 22.77°C (73° F) and relative humidity of 50 percent from 7 to 28 days of less than 300 grams/minute; or

(xxvi) the first part (a) exhibits a change in application rate as measured by WPSTM test E-56 at a temperature of 22.77°C (73° F) and relative humidity of 50 percent from 7 days to 14 months of less than 2000 grams/minute; or

(xxvii) the first part (a) exhibits a change in application rate as measured by WPSTM test E-56 at a temperature of 22.77°C (73° F) and relative humidity of 50 percent from 7 days to 14 months of less than 1000 grams/minute.

3. The two-part curable composition of Claim 1 wherein the capping agent is hexamethyldisilazane.

4. The two-part curable composition of Claim 2, part (vi) wherein fumed silica has a BET from 50 to 400 m$^2$/g.

5. The two-part curable composition of Claim 2, part (vii) wherein the fumed silica ranges from 10 to 30 weight percent of first part (a).

6. The two-part curable composition of Claim 2, part (xiii) wherein the condensation catalyst is selected from the group consisting of tin, titanium, zirconium, lead, iron cobalt, antimony, manganese, bismuth and zinc compounds.

7. The two-part curable composition of Claim 6 wherein

(a) the condensation catalyst is selected from the group consisting of dibutyltindilaurate, dibutyltindiacetate, dibutyltindimethoxide, tinoctoate, isobutyltintriceroate, dibutyltinoxide, dibutyltin bis-isooctylphthalate, bis-tripropoxysilyl dioctyltin, dibutyltin bis-acetylacetone, silylated dibutyltin dioxide, carbomethoxyphenyl tin tris-uberate, isobutyltin triceroate, dimethyltin dibutyrate, dimethyltin di-neodecanoate, triethyltin tartarate, dibutyltin dibenzoate, tin oleate, tin naphthenate, butyltintri-2-ethylhexylhexoate, and tinbutyrate; or

(b) the condensation catalyst is selected from the group consisting of diorganotin bis β-diketonates; or

(c) the condensation catalyst is selected from the group consisting of 1,3-propanedioxytitanium bis(ethylacetoacetate), di-isopropoxytitanium bis(ethylacetoacetate), tetra n-butyl titanate, tetra-isopropyl titanate, and mixtures thereof.

**8.** The two-part curable composition of Claim 2, part (xv) wherein

(a) the alkylsilicate has the general formula:

$$(R^{14}O)(R^{15}O)(R^{16}O)(R^{17}O)Si$$

where $R^{14}$, $R^{15}$, $R^{16}$ and $R^{17}$ are independently chosen monovalent hydrocarbon radicals up to 60 carbon atoms; or
(b) the alkylsilicate ranges from 0.01 weight percent to 20 weight percent of the total composition.

**9.** The two-part curable composition of Claim 8, part (b) wherein the alkylsilicate ranges from 0.3 weight percent to 5 weight percent of the total composition.

**10.** The two-part curable composition of Claim 9 wherein the alkylsilicate ranges from 0.5 weight percent to 1.5 weight percent of the total composition.

**11.** The two-part curable composition of Claim 2, part (xviii) wherein the adhesion promoter is selected from the group consisting of n-2-aminoethyl-3-aminopropyltrimethoxysilane and 1,3,5-tris(trimethoxysilylpropyl)isocyanurate and mixtures thereof.

**12.** The two-part curable composition of Claim 11 wherein the adhesion promoter is selected from the group consisiting of γ-aminopropyltrimethoxysilane and 1,3,5-tris(trimethoxysilylpropyl)isocyanurate and mixtures thereof.

**13.** The two-part curable composition of Claim 2, part (xix) wherein the surfactant ranges in amount from 0.1 weight percent to 5 weight percent of the total composition.

**14.** The two-part curable composition of Claim 13 wherein the surfactant ranges in amount from 0.2 weight percent to 1 weight percent of the total composition.

**Patentansprüche**

**1.** Zweiteilige härtbare, Silikonkautschuk bildende Zusammensetzung, die während der Lagerung als zwei Teile stabil ist, wobei die Zusammensetzung Folgendes umfasst:

a) einen ersten Teil, der Diorganopolysiloxan umfasst, wobei das Siliciumatom an jedem Polymerkettenende silanolterminiert ist;
b) einen zweiten Teil, der einen Kondensationskatalysator umfasst;
c) einen Vernetzer in dem ersten und/oder zweiten Teil;
d) Quarzstaub mit Oberflächensilanolgruppen, die mit einem Verkappungsmittel behandelt sind, wobei der Quarzstaub in dem ersten und/oder zweiten Teil vorliegt; und, optional
e) mindestens eine zusätzliche Komponente, die aus der aus alkylterminiertem Diorganopolysiloxan, Füllstoff, UV-Stabilisator, Antioxidans, Haftvermittler, Härtungsbeschleuniger, Thixotropiermittel, Weichmacher, Feuchtigkeitsfänger, Pigment, Farbstoff, Tensid, Lösungsmittel und Biozid bestehenden Gruppe ausgewählt ist, wobei die zusätzliche Komponente in dem ersten und/oder zweiten Teil vorliegt, je nachdem, welcher Teil/welche Teile der Komponente damit kompatibel ist/sind, wobei der erste Teil und der zweite Teil nach ihrer Vereinigung zu einem Siliconkautschuk aushärten,
wobei das Verkappungsmittel aus der aus Methyltrichlorsilan, Dimethyldichlorsilan, Trimethylchlorsilan, Methyltrimethoxysilan, Dimethyldimethoxysilan, Trimethylmethoxysilan, Methyltriethoxysilan, Dimethyldiethoxysilan, Trimethylethoxysilan, Methyltriacetoxysilan, Dimethyldiacetoxysilan, Trimethylacetoxysilan, Octylmethyldichlorsilan, Octyltrichlorsilan, Octadecylmethyldichlorsilan, Octadecyltrichlorsilan, Vinyltrichlorsilan, Vinylmethyldichlorsilan, Vinyldimethylchlorsilan, Vinyltrimethoxysilan, Vinylmethyldimethoxysilan, Vinyldimethylmethoxysilan, Vinyltriethoxysilan, Vinylmethyldiethoxysilan, Vinyldimethylethoxysilan, Hexamethyldisilazan, Divinyltetramethyldisilazan, Bis(3,3-trifluorpropyl)tetramethyldisilazan, Octamethylcyclotetrasilazan und Trimethylsilanol sowie Mischungen davon bestehenden Gruppe ausgewählt ist.

2. Zweiteilige härtbare Zusammensetzung nach Anspruch 1 mit einem der folgenden Merkmale (i) - (xxvii):

(i) das silanolterminierte Diorganopolysiloxan hat die allgemeine Formel:

$$M_a D_b D'_c$$

worin a 2 ist, b gleich oder größer als 1 ist und c null oder ein positiver Wert ist, wo $M = (HO)_{3-x-y}R^1_x R^2_y SiO_{1/2}$; wobei der tiefgestellte Index x 0, 1 oder 2 ist und der tiefgestellte Index y entweder 0 oder 1 ist, vorbehaltlich der Einschränkung, dass x + y kleiner oder gleich 2 ist, wobei $R^1$ und $R^2$ unabhängig voneinander gewählte einwertige Kohlenwasserstoffradikale mit bis zu 60 Kohlenstoffatomen sind; wo

$$D = R^3 R^4 SiO_{1/2};$$

wo $R^3$ und $R^4$ unabhängig voneinander gewählte einwertige Kohlenwasserstoffradikale mit bis zu 60 Kohlenstoffatomen sind; wo

$$D' = R^5 R^6 SiO_{2/2};$$

wo $R^5$ und $R^6$ unabhängig voneinander gewählte einwertige Kohlenwasserstoffradikale mit bis zu 60 Kohlenstoffatomen sind; oder
(ii) das silanolterminierte Diorganopolysiloxan liegt im Bereich von 5 Gew.-% bis 95 Gew.-% der gesamten Zusammensetzung; oder
(iii) das silanolterminierte Diorganopolysiloxan liegt im Bereich von 35 Gew.-% bis 85 Gew.-% der gesamten Zusammensetzung; oder
(iv) das silanolterminierte Diorganopolysiloxan liegt im Bereich von 50 Gew.-% bis 70 Gew.-% der gesamten Zusammensetzung; oder
(v) das silanolterminierte Diorganopolysiloxan hat eine Viskosität von 1.000 bis 200.000 cps bei 25°C; oder
(vi) der Quarzstaub hat eine spezifische BET-Oberfläche größer als 10 $m^2/g$; oder
(vii) der Quarzstaub liegt im Bereich von 5 bis 80 Gew.-% des ersten Teils (a); oder
(viii) das alkylterminierte Diorganopolysiloxan hat die allgemeine Formel:

$$M''_e D''_f D'''_g$$

wobei der tiefgestellte Index e = 2 und f größer oder gleich 1 ist, und wobei der tiefgestellte Index g null oder positiv ist, wo

$$M'' = R^7 R^8 R^9 SiO_{1/2};$$

wo $R^7$, $R^8$ und $R^9$ unabhängig voneinander gewählte einwertige Kohlenwasserstoffradikale mit bis zu 60 Kohlenstoffatomen sind; wo

$$D'' = R^{10} R^{11} SiO_{2/2};$$

wo $R^{10}$ und R'' unabhängig voneinander gewählte einwertige Kohlenwasserstoffradikale mit bis zu 60 Kohlenstoffatomen sind; wo

$$D''' = R^{12} R^{13} SiO_{2/2};$$

wo $R^{12}$ und $R^{13}$ unabhängig voneinander gewählte einwertige Kohlenwasserstoffradikale mit bis zu 60 Kohlenstoffatomen sind; oder
(ix) das alkylterminierte Diorganopolysiloxan liegt im Bereich von 0 Gew.-% bis 50 Gew.-% der gesamten Zusammensetzung; oder
(x) das alkylterminierte Diorganopolysiloxan liegt im Bereich von 5 Gew.-% bis 35 Gew.-% der gesamten Zusammensetzung; oder
(xi) das alkylterminierte Diorganopolysiloxan liegt im Bereich von 10 Gew.-% bis 30 Gew.-% der gesamten Zusammensetzung; oder

(xii) das alkylterminierte Diorganopolysiloxan hat eine Viskosität von 50 bis 200.000 cps bei 25°C; oder

(xiii) der Kondensationskatalysator ist aus der aus Metall- und Nichtmetallkatalysatoren bestehenden Gruppe ausgewählt; oder

(xiv) der Vernetzer hat mindestens eine Abgangsgruppe, die aus der aus Alkoxy, Acetoxy, Acetamido, Ketoxim, Benzamido, Aminoxy und Mischungen davon bestehenden Gruppe ausgewählt ist; oder

(xv) der Vernetzer ist ein Alkylsilicat; oder

(xvi) der Vernetzer ist aus der aus tetra-N-Propylsilicat, Tetraethylorthosilicat, Methyltrimethoxysilan, Methyltriacetoxysilan, Dibutoxydiacetoxysilan, Methylisopropoxydiacetoxysilan, Methyloximinosilan und Mischungen davon bestehenden Gruppe ausgewählt; oder

(xvii) alkylterminiertes Diorganopolysiloxan liegt, soweit vorhanden, in dem ersten und/oder zweiten Teil vor, Füllstoff liegt, soweit vorhanden, in dem ersten und/oder zweiten Teil vor; UV-Stabilisator liegt, soweit vorhanden, in dem ersten und/oder zweiten Teil vor; Antioxidans liegt, soweit vorhanden, in dem ersten und/oder zweiten Teil vor; Haftvermittler liegt, soweit vorhanden, in dem ersten und/oder zweiten Teil vor; Härtungsbeschleuniger liegt, soweit vorhanden, in dem ersten und/oder zweiten Teil vor; Thixotropiermittel liegt, soweit vorhanden, in dem ersten und/oder zweiten Teil vor; Feuchtigkeitsfänger liegt, soweit vorhanden, in dem ersten und/oder zweiten Teil vor; Pigment liegt, soweit vorhanden, in dem ersten und/oder zweiten Teil vor; Farbstoff liegt, soweit vorhanden, in dem ersten und/oder zweiten Teil vor; Tensid liegt, soweit vorhanden, in dem ersten und/oder zweiten Teil vor; Lösungsmittel liegt, soweit vorhanden, in dem ersten und/oder zweiten Teil vor; und Biozid liegt, soweit vorhanden, in dem ersten und/oder zweiten Teil vor; oder

(xviii) der Haftvermittler ist aus der aus n-2-Aminoethyl-3-aminopropyltrimethoxysilan, 1,3,5-Tris(trimethoxysilylpropyl)isocyanurat, n-2-Aminoethyl-3-aminopropyltriethoxysilan, $\gamma$-Aminopropyltriethoxysilan, $\gamma$-Aminopropyltrimethoxysilan, *bis*-$\gamma$-Trimethoxysilylpropylamin, N-Phenyl-$\gamma$-aminopropyltrimethoxysilan, triaminofunktionellem Trimethoxysilan, $\gamma$-Aminopropylmethyldiethoxysilan, $\gamma$-Aminopropylmethyldiethoxysilan, Methacryloxypropyltrimethoxysilan, Methylaminopropyltrimethoxysilan, $\gamma$-Glycidoxypropylethyldimethoxysilan, $\gamma$-Glycidoxypropyltrimethoxysilan, $\gamma$-Glycidoxyethyltrimethoxysilan, $\beta$-(3,4-Epoxycyclohexyl)propyltrimethoxysilan, $\beta$-(3,4-Epoxycyclohexyl)ethylmethyldimethoxysilan, Isocyanatopropyltriethoxysilan, Isocyanatopropylmethyldimethoxysilan, $\beta$-Cyanoethyltrimethoxysilan, $\gamma$-Acryloxypropyltrimethoxysilan, $\gamma$-Methacryloxypropylmethyldimethoxysilan, 4-Amino-3,3-dimethylbutyltrimethoxysilan, n-Ethyl-3-trimethoxysilyl-2-methylpropanamin und Mischungen davon bestehenden Gruppe ausgewählt; oder

(xix) das Tensid ist ein nicht ionogenes Tensid, das aus der aus Polyethylenglycol, Propypropylenglycol, ethoxyliertem Rizinusöl, Ölsäureethoxylat, Alkylphenyolethoxylaten, Copolymeren von Ethylenoxid und Propylenoxid sowie Copolymeren von Siliconen und Polyethern, Copolymeren von Siliconen und Copolymeren von Ethylenoxid und Propylenoxid sowie Mischungen davon in einer Menge im Bereich von 0 Gew.-% bis etwa 20 Gew.-% der gesamten Zusammensetzung bestehenden Gruppe von Tensiden ausgewählt ist; oder

(xx) die Durchlässigkeit einer nach dem ASTM-Test D412 hergestellten Siliconkautschukplatte ist größer als 40 Prozent; oder

(xxi) die Durchlässigkeit einer nach dem ASTM-Test D412 hergestellten Siliconkautschukplatte ist größer als 60 Prozent; oder

(xxii) die gehärtete Zusammensetzung hat eine Grünfestigkeit zwischen 6,89 kPa (1 psi) und 517 kPa (75 psi) nach dem Aushärten für einen Zeitraum im Bereich von 1 Minute bis 60 Minuten; oder

(xxiii) die gehärtete Zusammensetzung hat eine Grünfestigkeit zwischen 6,89 kPa (1 psi) und 310 kPa (45 psi) nach dem Aushärten für einen Zeitraum im Bereich von 1 Minute bis 60 Minuten; oder

(xxiv) der erste Teil (a) zeigt eine nach dem WPSTM-Test E-56 bei einer Temperatur von 22,77°C (73°F) und einer relativen Feuchte von 50 Prozent im Zeitraum von 7 bis 28 Tagen gemessene Änderung der Aufbringgeschwindigkeit von weniger als 1000 Gramm/Minute; oder

(xxv) der erste Teil (a) zeigt eine nach dem WPSTM-Test E-56 bei einer Temperatur von 22,77°C (73°F) und einer relativen Feuchte von 50 Prozent im Zeitraum von 7 bis 28 Tagen gemessene Änderung der Aufbringgeschwindigkeit von weniger als 300 Gramm/Minute; oder

(xxvi) der erste Teil (a) zeigt eine nach dem WPSTM-Test E-56 bei einer Temperatur von 22,77°C (73°F) und einer relativen Feuchte von 50 Prozent im Zeitraum von 7 Tagen bis 14 Monaten gemessene Änderung der Aufbringgeschwindigkeit von weniger als 2000 Gramm/Minute; oder

(xxvii) der erste Teil (a) zeigt eine nach dem WPSTM-Test E-56 bei einer Temperatur von 22,77°C (73°F) und einer relativen Feuchte von 50 Prozent im Zeitraum von 7 Tagen bis 14 Monaten gemessene Änderung der Aufbringgeschwindigkeit von weniger als 1000 Gramm/Minute.

**3.** Zweiteilige härtbare Zusammensetzung nach Anspruch 1, wobei das Verkappungsmittel Hexamethyldisilazan ist.

**4.** Zweiteilige härtbare Zusammensetzung nach Anspurch 2, Teil (vi), wobei der Quarzstaub ein BET von 50 bis 400

m$^2$/g besitzt.

5. Zweiteilige härtbare Zusammensetzung nach Anspruch 2, wobei der Quarzstaub im Bereich von 10 bis 30 Gew.-% des ersten Teils (a) liegt.

6. Zweiteilige härtbare Zusammensetzung nach Anspruch 2, Teil (xiii), wobei der Kondensationskatalysator aus der aus Zinn-, Titan-, Zirconium-, Blei-, Eisen-, Cobalt-, Antimon-, Mangan-, Bismut- und Zinkverbindungen bestehenden Gruppe ausgewählt ist.

7. Zweiteilige härtbare Zusammensetzung nach Anspruch 6, wobei

(a) der Kondensationskatalysator aus der aus Dibutylzinndilaurat, Dibutylzinndiacetat, Dibutylzinndimethoxid, Zinnoctoat, Isobutylzinntriceroat, Dibutylzinnoxid, Dibutylzinn-bis-isooctylphthalat, Bis-Tripropoxysilyldioctylzinn, Dibutylzinn-bis-acetylaceton, silyliertem Dibutylzinndioxid, Carbomethoxyphenylzinn-tris-uberat, Isobutylzinntriceroat, Dimethylzinndibutyrat, Dimethylzinn-di-neodecanoat, Triethylzinntartrat, Dibutylzinndibenzoat, Zinnoleat, Zinnnaphthenat, Butylzinn-tri-2-ethylhexylhexoat und Zinnbutyrat bestehenden Gruppe ausgewählt ist; oder
(b) der Kondensationskatalysator aus der aus Diorganozinn-bis-β-diketonaten bestehenden Gruppe ausgewählt ist; oder
(c) der Kondensationskatalysator aus der aus 1,3-Propandioxytitan-bis(ethylacetoacetat), Di-isopropoxytitan-bis(ethylacetoacetat), Tetra-n-butyltitanat, Tetra-isopropyltitanat und Mischungen davon bestehenden Gruppe ausgewählt ist.

8. Zweiteilige härtbare Zusammensetzung nach Anspruch 2, Teil (xv), wobei

(a) das Alkylsilicat die folgende allgemeine Formel hat:

$$(R^{14}O)(R^{15}O)(R^{16}O)(R^{17}O)Si$$

wo $R^{14}$, $R^{15}$, $R^{16}$ und $R^{17}$ unabhängig voneinander gewählte einwertige Kohlenwasserstoffradikale mit bis zu 60 Kohlenstoffatomen sind; oder
(b) das Alkylsilicat im Bereich von 0,01 Gew.-% bis 20 Gew.-% der gesamten Zusammensetzung liegt.

9. Zweiteilige härtbare Zusammensetzung nach Anspruch 8, Teil (b), wobei das Alkylsilicat im Bereich von 0,3 Gew.-% bis 5 Gew.-% der gesamten Zusammensetzung liegt.

10. Zweiteilige härtbare Zusammensetzung nach Anspruch 9, wobei das Alkylsilicat im Bereich von 0,5 Gew.-% bis 1,5 Gew.-% der gesamten Zusammensetzung liegt.

11. Zweiteilige härtbare Zusammensetzung nach Anspruch 2, Teil (xviii), wobei der Haftvermittler aus der aus n-2-Aminoethyl-3-aminopropyltrimethoxysilan und 1,3,5-Tris(trimethoxysilylpropyl)isocyanurat und Mischungen davon bestehenden Gruppe ausgewählt ist.

12. Zweiteilige härtbare Zusammensetzung nach Anspruch 11, wobei der Haftvermittler aus der aus γ-Aminopropyltrimethoxysilan und 1,3,5-Tris(trimethoxysilylpropyl)isocyanurat und Mischungen davon bestehenden Gruppe ausgewählt ist.

13. Zweiteilige härtbare Zusammensetzung nach Anspruch 2, Teil (xix), wobei das Tensid in einer Menge im Bereich von 0,1 Gew.-% bis 5 Gew.-% der gesamten Zusammensetzung vorliegt.

14. Zweiteilige härtbare Zusammensetzung nach Anspruch 13, wobei das Tensid in einer Menge im Bereich von 0,2 Gew.-% bis 1 Gew.-% der gesamten Zusammensetzung vorliegt.

**Revendications**

1. Composition formant un caoutchouc siliconé durcissable en deux parties qui est stable au stockage sous forme de deux parties, laquelle composition comprend :

a) une première partie comprenant du diorganopolysiloxane dans lequel l'atome de silicium à chaque extrémité de la chaîne polymère est à terminaison silanol ;

b) une deuxième partie comprenant un catalyseur de condensation ;

c) un agent de réticulation dans la première et/ou la deuxième partie ;

d) de la silice fumée ayant des groupes silanol en surface traités avec un agent de coiffage, la silice fumée étant présente dans la première et/ou la deuxième partie ; et éventuellement

e) au moins un composant additionnel choisi dans l'ensemble constitué par un diorganopolysiloxane à terminaison alkyle, une charge, un stabilisant UV, un antioxydant, un promoteur d'adhérence, un accélérateur de durcissement, un agent thixotrope, un plastifiant, un piégeur d'humidité, un pigment, un colorant, un tensioactif, un solvant et un biocide, le composant additionnel étant présent dans la première et/ou la deuxième partie, selon la ou les parties avec lesquelles le composant est compatible,

les première et deuxième parties, après leur combinaison, durcissant pour former un caoutchouc siliconé, dans laquelle l'agent de coiffage est choisi dans l'ensemble constitué par le méthyltrichlorosilane, le diméthyldichlorosilane, le triméthylchlorosilane, le méthyltriméthoxysilane, le diméthyldiméthoxysilane, le triméthylméthoxysilane, le méthyltriéthoxysilane, le diméthyldiéthoxysilane, le triméthyléthoxysilane, le méthyltriacétoxysilane, le diméthyldiacétoxysilane, le triméthylacétoxysilane, l'octylméthyldichlorosilane, l'octyltrichlorosilane, l'octadécylméthyldichlorosilane, l'octadécyltrichlorosilane, le vinyltrichlorosilane, le vinylméthyldichlorosilane, le vinyldiméthylchlorosilane, le vinyltriméthoxysilane, le vinylméthyldiméthoxysilane, le vinyldiméthylméthoxysilane, le vinyltriéthoxysilane, le vinylméthyldiéthoxysilane, le vinyldiméthyléthoxysilane, l'hexaméthyldisilazane, le divinyltétraméthyldisilazane, le bis(3,3-trifluoropropyl)tétraméthyldisilazane, l'octaméthylcyclotétrasilazane, et le triméthylsilanol, ainsi que leurs mélanges.

2. Composition durcissable en deux parties selon la revendication 1, ayant l'une des caractéristiques (i) à (xxvii) suivantes :

(i) le diorganopolysiloxane à terminaison silanol est de formule générale :

$$M_a D_b D'_c$$

dans laquelle a vaut 2, b est égal ou supérieur à 1 et c vaut zéro ou est un nombre positif, dans laquelle M = $(HO)_{3-x-y} R^1_x R^2_y SiO_{1/2}$ ; où l'indice x vaut 0, 1 ou 2 et l'indice y vaut soit 0 soit 1, sous réserve que x + y soit inférieur ou égal à 2, et $R^1$ et $R^2$ sont indépendamment choisis parmi les radicaux hydrocarbonés monovalents ayant jusqu'à environ 60 atomes de carbone ; dans laquelle

$$D = R^3 R^4 SiO_{1/2} ;$$

où $R^3$ et $R^4$ sont indépendamment choisis parmi les radicaux hydrocarbonés monovalents ayant jusqu'à environ 60 atomes de carbone ; et dans laquelle

$$D' = R^5 R^6 SiO_{2/2} ;$$

où $R^5$ et $R^6$ sont indépendamment choisis parmi les radicaux hydrocarbonés monovalents ayant jusqu'à environ 60 atomes de carbone ; ou

(ii) le diorganopolysiloxane à terminaison silanol représente de 5 % en poids à 95 % en poids de la composition totale ; ou

(iii) le diorganopolysiloxane à terminaison silanol représente de 35 % en poids à 85 % en poids de la composition totale ; ou

(iv) le diorganopolysiloxane à terminaison silanol représente de 50 % en poids à 70 % en poids de la composition totale ; ou

(v) le diorganopolysiloxane à terminaison silanol possède une viscosité de 1 000 à 200 000 cps à 25°C ; ou

(vi) la silice fumée a une surface spécifique BET supérieure à 10 m²/g ; ou

(vii) la silice fumée représente de 5 à 80 % en poids de la première partie (a) ; ou

(viii) le diorganopolysiloxane à terminaison alkyle est de formule générale :

$$M''_c D''_f D'''_g$$

dans laquelle l'indice e = 2 et f est égal ou supérieur à 1, et l'indice g vaut zéro ou est un nombre positif, et dans laquelle

M" = $R^7R^8R^9SiO_{1/2}$ ;

où $R^7$, $R^8$ et $R^9$ sont indépendamment choisis parmi les radicaux hydrocarbonés monovalents ayant jusqu'à environ 60 atomes de carbone ; et dans laquelle

D" = $R^{10}R^{11}SiO_{2/2}$ ;

où $R^{10}$ et $R^{11}$ sont indépendamment choisis parmi les radicaux hydrocarbonés monovalents ayant jusqu'à environ 60 atomes de carbone ; et dans laquelle

D'" = $R^{12}R^{13}SiO_{2/2}$ ;

où $R^{12}$ et $R^{13}$ sont indépendamment choisis parmi les radicaux hydrocarbonés monovalents ayant jusqu'à environ 60 atomes de carbone ; ou

(ix) le diorganopolysiloxane à terminaison alkyle représente de 0 % en poids à 50 % en poids de la composition totale ; ou

(x) le diorganopolysiloxane à terminaison alkyle représente de 5 % en poids à 35 % en poids de la composition totale ; ou

(xi) le diorganopolysiloxane à terminaison alkyle représente de 10 % en poids à 30 % en poids de la composition totale ; ou

(xii) le diorganopolysiloxane à terminaison alkyle possède une viscosité de 50 à 200 000 cps à 25°C ; ou

(xiii) le catalyseur de condensation est choisi dans l'ensemble constitué par les catalyseurs métalliques et non métalliques ; ou

(xiv) l'agent de réticulation a au moins un groupe partant choisi dans l'ensemble constitué par alcoxy, acétoxy, acétamido, cétoxime, benzamido, aminoxy et leurs mélanges ; ou

(xv) l'agent de réticulation est un silicate d'alkyle ; ou

(xvi) l'agent de réticulation est choisi dans l'ensemble constitué par le silicate de tétra-N-propyle, l'orthosilicate de tétraéthyle, le méthyltriméthoxysilane, le méthyltriacétoxysilane, le dibutoxydiacétoxysilane, le méthylisopropoxydiacétoxysilane, le méthyloximinosilane et leurs mélanges ; ou

(xvii) un diorganopolysiloxane à terminaison alkyle, lorsqu'il est présent, est dans la première et/ou la deuxième partie, une charge, lorsqu'elle est présente, est dans la première et/ou la deuxième partie ; un stabilisant UV, lorsqu'il est présent, est dans la première et/ou la deuxième partie ; un antioxydant, lorsqu'il est présent, est dans la première et/ou la deuxième partie ; un promoteur d'adhérence, lorsqu'il est présent, est dans la première et/ou la deuxième partie ; un accélérateur de durcissement, lorsqu'il est présent, est dans la première et/ou la deuxième partie ; un agent thixotrope, lorsqu'il est présent, est dans la première et/ou la deuxième partie ; un piégeur d'humidité, lorsqu'il est présent, est dans la première et/ou la deuxième partie ; un pigment, lorsqu'il est présent, est dans la première et/ou la deuxième partie ; un colorant, lorsqu'il est présent, est dans la première et/ou la deuxième partie ; un tensioactif, lorsqu'il est présent, est dans la première et/ou la deuxième partie ; un solvant, lorsqu'il est présent, est dans la première et/ou la deuxième partie ; et un biocide, lorsqu'il est présent, est dans la première et/ou la deuxième partie ; ou

(xviii) le promoteur d'adhérence est choisi dans l'ensemble constitué par le n-2-aminoéthyl-3-aminopropyltriméthoxysilane, l'isocyanurate de 1,3,5-tris(triméthoxysilylpropyle), le n-2-aminoéthyl-3-aminopropyltriéthoxysilane, le γ-aminopropyltriéthoxysilane, le γ-aminopropyltriméthoxysilane, la bis-γ-triméthoxysilyl-propylamine, le N-phényl-γ-aminopropyltriméthoxysilane, le triméthoxysilane triamino-fonctionnel, le γ-aminopropyl-méthyldiéthoxysilane, le γ-aminopropylméthyldiéthoxysilane, le méthacryloxypropyltriméthoxysilane, le méthylamino-propyltriméthoxysilane, le γ-glycidoxypropyléthyldiméthoxy-silane, le γ-glycidoxypropyltriméthoxysilane, le γ-glycidoxyéthyltriméthoxysilane, le β-(3,4-époxycyclo-hexyl)propyltriméthoxysilane, le β-(3,4-époxycyclo-hexyl)éthylméthyldiméthoxysilane, l'isocyanatopropyl-triéthoxysilane, l'isocyanatopropylméthyldiméthoxysilane, le β-cyanoéthyltriméthoxysilane, le γ-acryloxypropyl-triméthoxysilane, le γ-méthacryloxypropylméthyl-diméthoxysilane, le 4-amino-3,3-diméthylbutyltriméthoxy-silane, la n-éthyl-3-triméthoxysilyl-2-méthylamino-propanamine et leurs mélanges ; ou

(xix) le tensioactif est un tensioactif non-ionique choisi dans le groupe de tensioactifs constitué par le polyéthylèneglycol, le polypropylèneglycol, l'huile de ricin éthoxylée, les produits d'éthoxylation d'acide oléique, les produits d'éthoxylation d'alkylphénol, les copolymères d'oxyde d'éthylène et d'oxyde de propylène et les copolymères de silicones et de polyéthers, les copolymères de silicones et de copolymères d'oxyde d'éthylène et d'oxyde de propylène, ainsi que leurs mélanges, en une quantité située dans la plage allant de 0 % en poids à environ 20 % en poids de la composition totale ; ou

(xx) le coefficient de transmission d'une feuille du caoutchouc siliconé, préparée conformément à la méthode de test ASTM D412, est supérieur à 40 % ; ou

(xxi) le coefficient de transmission d'une feuille du caoutchouc siliconé, préparée conformément à la méthode de test ASTM D412, est supérieur à 60 % ; ou

(xxii) la composition durcie a une résistance à cru comprise entre 6,89 kPa (1 psi) et 517 kPa (75 psi) après durcissement pendant une période de temps allant de 1 minute à 60 minutes ; ou

(xxiii) la composition durcie a une résistance à cru comprise entre 6,89 kPa (1 psi) et 310 kPa (45 psi) après durcissement pendant une période de temps allant de 1 minute à 60 minutes ; ou

(xxiv) la première partie (a) présente un changement de la vitesse d'application, telle que mesurée par le test WPSTM E-56 à une température de 22,77°C (73°F) et sous une humidité relative de 50 %, entre 7 et 28 jours, inférieure à 1000 grammes/minute ; ou

(xxv) la première partie (a) présente un changement de la vitesse d'application, telle que mesurée par le test WPSTM E-56 à une température de 22,77°C (73°F) et sous une humidité relative de 50 %, entre 7 et 28 jours, inférieure à 300 grammes/minute ; ou

(xxvi) la première partie (a) présente un changement de la vitesse d'application, telle que mesurée par le test WPSTM E-56 à une température de 22,77°C (73°F) et sous une humidité relative de 50 %, entre 7 jours et 14 mois, inférieure à 2000 grammes/minute ; ou

(xxvii) la première partie (a) présente un changement de la vitesse d'application, telle que mesurée par le test WPSTM E-56 à une température de 22,77°C (73°F) et sous une humidité relative de 50 %, entre 7 jours et 14 mois, inférieure à 1000 grammes/minute.

3. Composition durcissable en deux parties selon la revendication 1, dans laquelle l'agent de coiffage est l'hexaméthyldisilazane.

4. Composition durcissable en deux parties selon la revendication 2, partie (vi), dans laquelle la silice fumée a une surface spécifique BET de 50 à 400 m$^2$/g.

5. Composition durcissable en deux parties selon la revendication 2, partie (vii), dans laquelle la silice fumée représente de 10 à 30 % en poids de la première partie (a).

6. Composition durcissable en deux parties selon la revendication 2, partie (xiii), dans laquelle le catalyseur de condensation est choisi dans l'ensemble constitué par les composés de l'étain, du titane, du zirconium, du plomb, du fer, du cobalt, de l'antimoine, du manganèse, du bismuth et du zinc.

7. Composition durcissable en deux parties selon la revendication 6, dans laquelle

(a) le catalyseur de condensation est choisi dans l'ensemble constitué par le dilaurate de dibutyl-étain, le diacétate de dibutyl-étain, le diméthylate de dibutyl-étain, l'octoate d'étain, le tricéroate d'isobutyl-étain, l'oxyde de dibutyl-étain, le bis-isooctylphtalate de dibutyl-étain, le bis-tripropoxysilyldioctyl-étain, le bis-acétylacétonate de dibutyl-étain, le dioxyde de dibutyl-étain silylé, le trisubérate de carbométhoxyphényl-étain, le tricéroate d'isobutyl-étain, le dibutyrate de diméthyl-étain, le dinéodécanoate de diméthyl-étain, le tartrate de triéthyl-étain, le dibenzoate de dibutyl-étain, l'oléate d'étain, le naphténate d'étain, le tri-2-éthylhexylhexoate de butyl-étain, et le butyrate d'étain ; ou

(b) le catalyseur de condensation est choisi dans l'ensemble constitué par les bis-β-dicétonates d'étain ; ou

(c) le catalyseur de condensation est choisi dans l'ensemble constitué par le bis(éthylacétoacétate) de 1,3-propanedioxy-titane, le bis(éthylacétoacétate) de diisopropoxy-titane, le titanate de tétra-n-butyle, le titanate de tétraisopropyle, et leurs mélanges.

8. Composition durcissable en deux parties selon la revendication 2, partie (xv), dans laquelle

(a) le silicate d'alkyle est de formule générale :

$$(R^{14}O)(R^{15}O)(R^{16}O)(R^{17}O)Si$$

dans laquelle R$^{14}$, R$^{15}$, R$^{16}$ et R$^{17}$ sont indépendamment choisis parmi les radicaux hydrocarbonés monovalents ayant jusqu'à environ 60 atomes de carbone ; ou

(b) le silicate d'alkyle représente de 0,01 % en poids à 20 % en poids de la composition totale.

9. Composition durcissable en deux parties selon la revendication 8, partie (b), dans laquelle le silicate d'alkyle représente de 0,3 % en poids à 5 % en poids de la composition totale.

10. Composition durcissable en deux parties selon la revendication 9, dans laquelle le silicate d'alkyle représente de 0,5 % en poids à 1,5 % en poids de la composition totale.

11. Composition durcissable en deux parties selon la revendication 2, partie (xviii), dans laquelle le promoteur d'adhérence est choisi dans l'ensemble constitué par le n-2-aminoéthyl-3-aminopropyltriméthoxysilane et l'isocyanurate de 1,3,5-tris(triméthoxysilylpropyle), ainsi que leurs mélanges.

12. Composition durcissable en deux parties selon la revendication 11, dans laquelle le promoteur d'adhérence est choisi dans l'ensemble constitué par le γ-aminopropyltriméthoxysilane et l'isocyanurate de 1,3,5-tris(triméthoxysilylpropyle), ainsi que leurs mélanges.

13. Composition durcissable en deux parties selon la revendication 2, partie (xix), dans laquelle le tensioactif représente de 0,1 % en poids à 5 % en poids de la composition totale.

14. Composition durcissable en deux parties selon la revendication 13, dans laquelle le tensioactif représente de 0,2 % en poids à 1 % en poids de la composition totale.

**EP 2 010 608 B1**

**Patent documents cited in the description**

- US 2005192387 A
- US 5213899 A
- US 4554338 A
- US 4956436 A
- US 5489479 A
- US 5744703 A